# EUROPÄISCHE PATENTANMELDUNG

(11) **EP 4 550 598 A1**
(43) Veröffentlichungstag der Anmeldung: **07.05.2025**
(21) Anmeldenummer: 24198609.0
(22) Anmeldetag: 05.09.2024
(51) Int. Cl.: H02G 3/18, H02G 3/14, H02G 3/12, H01R 13/447, H01R 25/00

(54) **DOSENGEHÄUSE; VERFAHREN ZUR BEDIENUNG EINES DOSENGEHÄUSES**

(30) Priorität: 31.10.2023 DE 102023130119; 04.06.2024 DE 102024115508
(71) Anmelder: Bachmann GmbH, 70565 Stuttgart (DE)
(72) Erfinder: Linhardt, Jan, 70771 Leinfelden-Echterdingen (DE); Elbert, Patrick, 71229 Leonberg (DE)
(74) Vertreter: Patentanwälte Schuster, Müller & Partner mbB

(57) **Zusammenfassung**

Es werden ein Dosengehäuse (1) und ein Verfahren zur Bedienung eines Dosengehäuses (1) vorgeschlagen, wobei das Dosengehäuses (1) ein Gehäuse (2) aufweist, das an einer Seite mit einem Deckel (3) abgedeckt ist, wobei der Deckel (3) mindestens eine Öffnung (4) aufweist, wobei zum Verschließen einer Öffnung (4) in der Öffnung (4) mindestens ein Steckdosengehäuse (7) angeordnet ist, wobei ein in der Öffnung (4) angeordnetes Steckdosengehäuse (7) zwei Stirnseiten (9, 10) aufweist, zwischen denen eine Kante (11) bildend eine Anschlussseite (12) und mindestens eine eine geschlossene Oberfläche (5) aufweisende Seite (6) zueinander winklig angeordnet sind, wobei ein Steckdosengehäuse (7) drehbar um eine durch die zwei Stirnseiten (9, 10) des Steckdosengehäuse (7) verlaufende Achse in dem Dosengehäuse (1) angeordnet ist, so dass ein Steckdosengehäuse (7) entweder zur Nutzung seiner Anschlussseite (12) in eine Position verdreht werden kann, in der die Öffnung (4) durch die Anschlussseite (12) verschlossen ist oder zum Schutz seiner Anschlussseite (12) in eine Position, in der die Anschlussseite (12) verborgen ist, verdreht werden kann, in der die Öffnung (4) durch die eine geschlossene Oberfläche (5) aufweisende Seite (6) des Steckdosengehäuses (7) verschlossen ist.

## Beschreibung

### Stand der Technik

Die Erfindung geht aus von einem Dosengehäuse, nach der Gattung des Anspruchs 1, und einem Verfahren zur Bedienung eines Dosengehäuses, nach der Gattung des Anspruchs 10.

Dosengehäuse gibt es in vielfältigen Ausführungen. So sind aus dem Stand der Technik insbesondere Mehrfachsteckdosengehäuse für kabelgebundene Mehrfachsteckdosen, Aufputzdosengehäuse und Einbaugehäuse, die zum Einbau in eine Wand, einen Boden, eine Decke und/oder ein Möbel, nämlich beispielsweise in eine Arbeitsplatte, insbesondere in eine Küchenarbeitsplatte, verwendet werden, bekannt. Dosengehäuse können unterschiedlich bestückt sein, sodass sie mindestens eine Steckdose, mindestens ein Informationsanschluss und/oder mindestens ein Schalter aufweisen können. Auch bei den Steckdosen gibt es unterschiedliche Ausführungsformen, so dass Steckdosen mit erhöhtem Berührschutz oder mit einer Steckereinführhilfe, durch die ein Einstecken des Steckers in die Steckdose erleichtert wird, da die richtige Einsteckposition durch ein Einführen des Steckers in den Steckdosentopf und ein Verdrehen des Steckers innerhalb des Steckdosentopf bis die Kontaktstifte des Steckers in den Kontaktöffnungen der Steckdose verrasten ermittelbar ist, vorbekannt sind.

Diese Steckdosengehäuse und insbesondere die Einbaugehäuse, die auch als Einbausteckdosen bezeichnet werden und die beispielsweise in eine Küchenplatte eingebaut werden, haben den Nachteil, dass in dem nach oben gerichteten Dosentopf Schmutz, Fremdkörper oder Feuchtigkeit eindringen könnte, falls kein Stecker in der Dose eingesteckt sein sollte.

Daher wird in der Offenlegungsschrift DE 10 2004 051 064 A1 eine Vorrichtung vorgeschlagen, die zur Aufnahme mindestens eines Steckdoseneinsatzes dient und mit einem Deckel verschließbar ist. Nachteilig ist, dass der Deckel jederzeit geöffnet werden kann und nicht dichtend schließt.

In der Offenlegungsschrift DE 24 58 243 A1 wird eine Schutzvorrichtung für Installationselemente, insbesondere elektrische Installationselemente, wie Steckdosen, Schalter odgl., beschrieben. Die Schutzvorrichtung weist eine Abdeck-Klappe auf, durch die die Installationselemente unzugänglich verdeckt werden. An der Abdeck-Klappe ist eine verdrehbare Deckelplatte angeordnet, die einen Sicherheitsriegel aufweist, durch den das Öffnen der Abdeck-Klappe nur in einer bestimmten Stellung ermöglicht wird. Nachteilig ist, dass die Abdeck-Klappe zum Öffnen nach oben geschwenkt wird, so dass sie, da sie in der Öffnungsposition über die übrigen Bauteile vorsteht, gegebenenfalls im geöffneten Zustand stört.

In der Patentschrift DE 10 2007 063 585 B4 wird eine Steckdose beschrieben, die einen in ein Frontelement integrierten Verschluss aufweist, der aus mehreren Verschlusselementen besteht. Die Verschlusselemente sind über ein Festlager bewegbar angeordnet, wobei die Bewegung radial ein- oder auswärts gegenüber dem Mittelpunkt des Frontelementes erfolgt. Vorteilhaft ist, dass dadurch das Frontelement sehr flach bauend ausgestaltet werden kann. Nachteilig ist allerdings der konstruktive Aufwand zu bewerten.

Konstruktiv aufwändig sind auch die in der Gebrauchsmusterschrift DE 202 09 189 U1, Patentschrift US 6 542 218 B1 und der Gebrauchsmusterschrift DE 93 15 394 U1 beschriebenen verschließbaren Steckdosen.

Aus der Patentschrift DE 10 2012 025 533 B4 ist ein Einbaugehäuse zum Einbau in ein Möbel, eine Wand, einen Boden und/oder eine Decke bekannt, das mindestens einen durch eine Gehäusewandung begrenzten Innenraum aufweist, in dem mindestens eine Steckdose, mindestens ein Informationsanschluss und/oder mindestens ein Schalter untergebracht ist, wobei eine den Innenraum abdeckende Abdeckung mindestens eine durch einen Verschluss verschließbare Öffnung aufweist und die Abdeckung beweglich an der Gehäusewandung angeordnet ist, so dass die Abdeckung bei einem entriegelten Verschluss um eine senkrecht auf den Innenraum ausgerichtete Drehachse drehbar an der Gehäusewandung angeordnet ist. Nachteilig ist hierbei, dass ein Benutzer ein gewisses händisches Geschick aufweisen muss, um gleichzeitig während des Drückens des Entriegelungsknopfes die Abdeckung zu verdrehen.

Nachteilig ist zudem bei den vorbekannten Lösungen, dass diese entweder mechanisch (z.B. Deckel) oder elektromechanisch (z.B. Knopf oder Touch-Sensor) geöffnet werden, wodurch ein Benutzer eine direkte Betätigung am Produkt ausführt. Verschmutzungen am Produkt durch Betätigung sind daher möglich und nicht auszuschließen.

Der Erfindung liegt daher die Aufgabe zugrunde, eine die Nachteile des Standes der Technik überwindendes Dosengehäuse und ein die Nachteile des Standes der Technik überwindendes Verfahren zur Bedienung eines Dosengehäuses bereitzustellen.

### Die Erfindung und ihre Vorteile

Das erfindungsgemäße Dosengehäuse, mit den Merkmalen des Anspruchs 1, und das erfindungsgemäße Verfahren zur Bedienung eines Dosengehäuses, mit den Merkmalen des Anspruchs 10, haben demgegenüber den Vorteil, dass das erfindungsgemäße Dosengehäuse, das ein Gehäuse aufweist, das an einer Seite mit einem Deckel abgedeckt ist, wobei der Deckel mindestens eine Öffnung aufweist, wobei zum Verschlie-ßen einer Öffnung in der Öffnung mindestens ein Steckdosengehäuse angeordnet ist, wobei ein in der Öffnung angeordnetes Steckdosengehäuse zwei Stirnseiten aufweist, zwischen denen eine Kante bildend eine Anschlussseite und mindestens eine eine geschlossene Oberfläche aufweisende Seite zueinander winklig angeordnet sind, wobei ein Steckdosengehäuse drehbar um eine durch die zwei Stirnseiten des Steckdosengehäuses verlaufende Achse in dem Dosengehäuse angeordnet ist, wodurch die Öffnung entweder durch die Anschlussseite oder die eine geschlossene Oberfläche aufweisende Seite des Steckdosengehäuses verschließbar ist.

Nach einer vorteilhaften Ausgestaltung des erfindungsgemäßen Dosengehäuses ist an der Anschlussseite mindestens ein Steckdosentopf, mindestens ein USB-Anschluss, mindestens ein USB-Charger, mindestens ein Wireless-Charger, mindestens ein Schalter, mindestens eine LAN-Dose, mindestens ein Scart-Anschluss und/oder mindestens einen computerüblicher Anschluss odgl. angeordnet.

Nach einer zusätzlichen vorteilhaften Ausgestaltung des erfindungsgemäßen Dosengehäuses sind die Anschlussseite und die eine geschlossene Oberfläche aufweisende Seite des Steckdosengehäuses in einem rechten Winkel zueinander angeordnet.

Nach einer zusätzlichen vorteilhaften Ausgestaltung des erfindungsgemäßen Dosengehäuses weist mindestens ein Steckdosengehäuse eine abgerundete Kante auf. im Falle des Stirnseiten mit mindestens eine abgerundete Ecke aufweisenden Steckdosengehäuses verringert sich die Einbautiefe.

Nach einer zusätzlichen vorteilhaften Ausgestaltung des erfindungsgemäßen Dosengehäuses erfolgt die Drehung eines Steckdosengehäuses durch eine Gestensteuerung und/oder durch eine Sprachsteuerung und/oder durch einen Lichtsensor, wodurch sich das Steckdosengehäuse berührungslos öffnen lässt. Dadurch ist keine berührende Betätigung des Benutzers am Produkt notwendig, wodurch eine Verschmutzung vermieden wird.

Nach einer diesbezüglichen vorteilhaften Ausgestaltung des erfindungsgemäßen Dosengehäuses weist die Gestensteuerung mindestens einen Sensor auf, durch den eine Geste erkannt wird.

Nach einer zusätzlichen vorteilhaften Ausgestaltung des erfindungsgemäßen Dosengehäuses weist mindestens ein Steckdosengehäuse zur Steckererkennung mindestens einen Sensor und/oder mindestens einen Switch auf.

Nach einer zusätzlichen vorteilhaften Ausgestaltung des erfindungsgemäßen Dosengehäuses ist der Deckel abnehmbar.

Nach einer zusätzlichen vorteilhaften Ausgestaltung des erfindungsgemäßen Dosengehäuses weist eine eine geschlossene Oberfläche aufweisende Seite des Steckdosengehäuses einen Wireless-Charger auf.

Das erfindungsgemäße Dosengehäuse weist insbesondere folgende fakultativen Vorteile auf:
- Berührungsloses Öffnen und Schließen des Steckdosentopfes inkl. USB-Charger. Hierzu können ein Näherungssensor, ein Lichtsensor, der das erfindungsgemäße Dosengehäuse bei Dunkelheit schließt und bei Helligkeit öffnet, und/oder eine Sprachsteuerung zum Einsatz kommen.
- Steckererkennung am Steckdosentopf und USB-Charger
- Automatisches Schließen, wenn z.B. Steckdosentopf und/oder USB-Charger nicht benutzt werden
- Abnehmbarer Deckel
- Cleanes Design (keine sichtbaren Schrauben)
- Montage über Schubladen durch geringe Einbautiefe möglich
- Montage von oben möglich
- Programmierter Modus verhindert das Öffnen und Schließen zur vereinfachten Reinigung des Produkts

Nach einer vorteilhaften Ausgestaltung des erfindungsgemäßen Verfahrens zur Bedienung eines Dosengehäuses, wobei das Dosengehäuses ein Gehäuse aufweist, das an einer Seite mit einem Deckel abgedeckt ist, wobei der Deckel mindestens eine Öffnung aufweist, wobei zum Verschließen einer Öffnung in der Öffnung mindestens ein Steckdosengehäuse angeordnet ist, wobei ein in der Öffnung angeordnetes Steckdosengehäuse zwei Stirnseiten aufweist, zwischen denen eine Kante bildend eine Anschlussseite und mindestens eine eine geschlossene Oberfläche aufweisende Seite zueinander winklig angeordnet sind, wobei ein Steckdosengehäuse drehbar um eine durch die zwei Stirnseiten des Steckdosengehäuse verlaufende Achse in dem Dosengehäuse angeordnet ist, so dass ein Steckdosengehäuse entweder zur Nutzung seiner Anschlussseite in eine Position verdreht werden kann, in der die Öffnung durch die Anschlussseite verschlossen ist oder zum Schutz seiner Anschlussseite in eine Position, in der die Anschlussseite verborgen ist, verdreht werden kann, in der die Öffnung durch die eine geschlossene Oberfläche aufweisende Seite des Steckdosengehäuses verschlossen ist, wird ein Steckdosengehäuse durch eine Gestensteuerung und/oder durch eine Sprachsteuerung und/oder durch einen Lichtsensor gedreht.

Nach einer zusätzlichen vorteilhaften Ausgestaltung des erfindungsgemäßen Verfahrens wird bei einer Nichtbenutzung der Anschlussseite das Steckdosengehäuse automatisch in die Position verdreht, in der die Öffnung durch die eine geschlossene Oberfläche aufweisende Seite des Steckdosengehäuses verschlossen ist.

Nach einer zusätzlichen vorteilhaften Ausgestaltung des erfindungsgemäßen Verfahrens wird eine Erkennung eines auf der Anschlussseite eingesteckten Steckers durch mindestens einen Sensor und/oder durch mindestens einen Switch eine Drehung des Steckdosengehäuses verhindert.

Nach einer zusätzlichen vorteilhaften Ausgestaltung des erfindungsgemäßen Verfahrens wird bei dem Verfahren ein Dosengehäuse, gemäß einem der Ansprüche 1 bis 9, eingesetzt.

Weitere Vorteile und vorteilhafte Ausgestaltungen der Erfindung sind der nachfolgenden Beschreibung und den Zeichnungen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigt
- Fig. 1: eine perspektivische Darstellung eines erfindungsgemäßen Dosengehäuses in einem Zustand, in dem eine Anschlussseite nicht zugänglich ist,
- Fig. 2: eine Aufsicht auf das erfindungsgemäße Dosengehäuse, gemäß Fig. 1,
- Fig. 3: eine Seitenansicht des erfindungsgemäßen Dosengehäuses, gemäß Fig. 1,
- Fig. 4: eine weitere Seitenansicht des erfindungsgemäßen Dosengehäuses, gemäß Fig. 1,
- Fig. 5: eine weitere Seitenansicht des erfindungsgemäßen Dosengehäuses, gemäß Fig. 1,
- Fig. 6: eine Ansicht auf das erfindungsgemäße Dosengehäuse, gemäß Fig. 1, von unten,
- Fig. 7: eine perspektivische Ansicht des erfindungsgemäßen Dosengehäuses, gemäß Fig. 1, im halb geöffneten Zustand,
- Fig. 8: eine perspektivische Ansicht des erfindungsgemäßen Dosengehäuses, gemäß Fig. 1, in einem Zustand, in dem eine Anschlussseite zugänglich ist,
- Fig. 9: Baugruppen des Steckdosengehäuses,
- Fig. 10: eine Explosionszeichnung eines aus mehreren Teilen bestehenden Deckels,
- Fig. 11: eine Schnittansicht der Anbringung bzw. Lösung des Deckels vom Gehäuse,
- Fig. 12: weitere Details eines erfindungsgemäßen Dosengehäuses,
- Fig. 13: eine Seitenansicht des erfindungsgemäßen Dosengehäuses,
- Fig. 14: eine weitere Detailansicht des erfindungsgemäßen Dosengehäuses,
- Fig. 15: eine im Schnitt dargestellte Seitenansicht eines erfindungsgemäßen Dosengehäuses im Schnitt im geschlossenen Zustand,
- Fig. 16: eine im Schnitt dargestellte Seitenansicht eines erfindungsgemäßen Dosengehäuses im Schnitt im halb geöffneten Zustand und
- Fig. 17: eine im Schnitt dargestellte Seitenansicht eines erfindungsgemäßen Dosengehäuses im Schnitt im geöffneten Zustand.

### Beschreibung des Ausführungsbeispiels

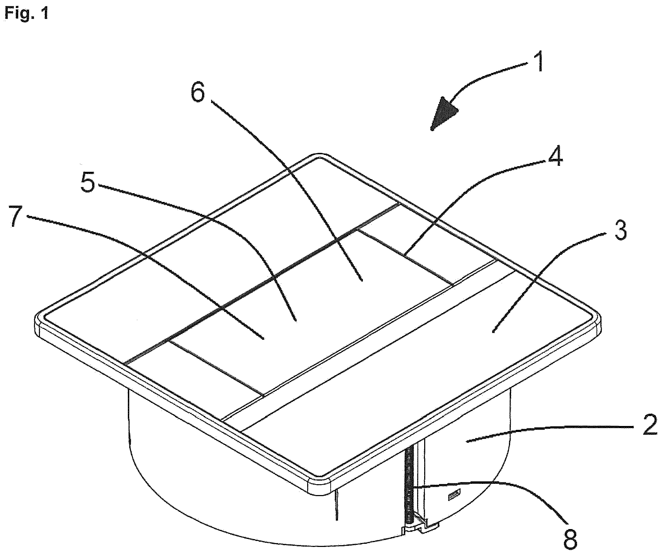

Fig. 1 zeigt eine perspektivische Ansicht eines erfindungsgemäßen Dosengehäuses 1 in einem Zustand, in dem eine Anschlussseite nicht zugänglich ist. Das erfindungsgemäße Dosengehäuses 1 weist eine Gehäuse 2 auf, das an einer bevorzugt nach oben gerichteten Seite mit einem Deckel 3 (Abdeckung, Abdeckscheibe) abgedeckt ist. Der Deckel 3 weist eine Öffnung 4 auf, die durch eine eine geschlossene Oberfläche 5 aufweisende Seite 6, die Teil eines Steckdosengehäuses 7 ist, verschlossen ist.

Das erfindungsgemäße Dosengehäuses 1 ist bevorzugt als Einbaugehäuse ausgestaltet, so dass es beispielsweise in eine nicht dargestellten Arbeitsplatte eingebaut werden kann. Bevorzugt ist das Einbaugehäuse durch Schrauben 8 von unten an der nicht dargestellten Arbeitsplatte fixierbar. Denkbar ist auch, dass die Schrauben 8 von oben bedient werden oder dass die Schrauben 8 beidseitig bedient werden können. Eine Befestigung von oben ist bevorzugt möglich, wenn der Deckel 3 abnehmbar ist, so dass dadurch die Schrauben 8 freigelegt und erreichbar werden.

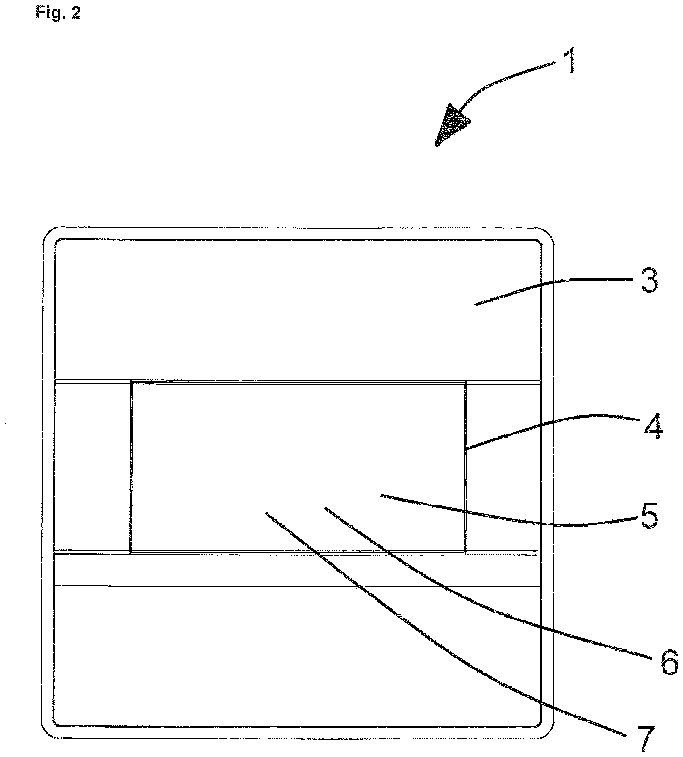

Fig. 2 zeigt eine Aufsicht auf das erfindungsgemäße Dosengehäuse 1, gemäß Fig. 1.

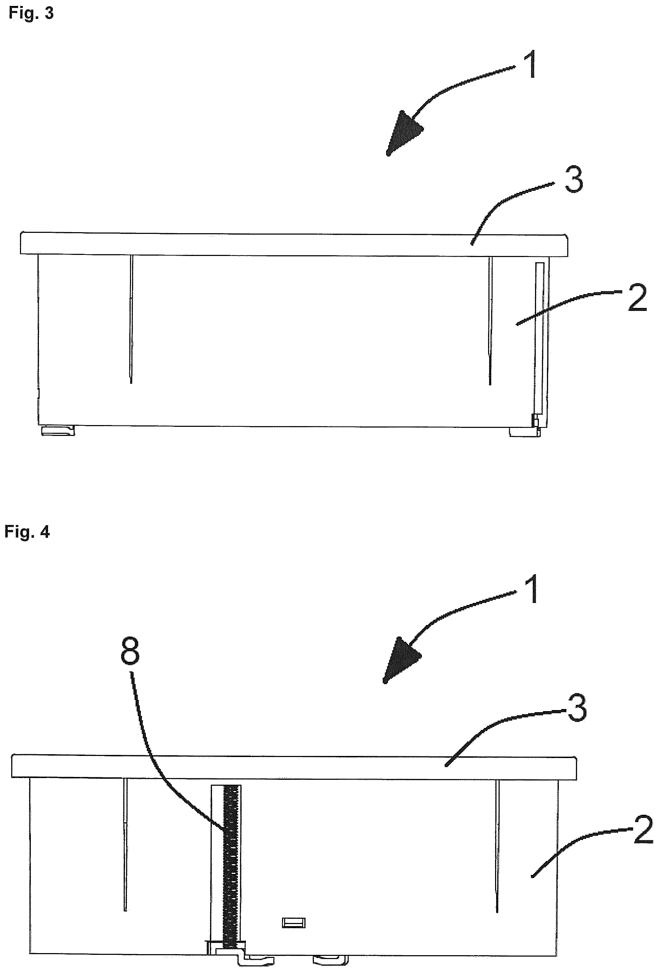

Fig. 3 zeigt eine Seitenansicht des erfindungsgemäßen Dosengehäuses 1, gemäß Fig. 1.

Fig. 4 zeigt eine weitere Seitenansicht des erfindungsgemäßen Dosengehäuses 1, gemäß Fig. 1.

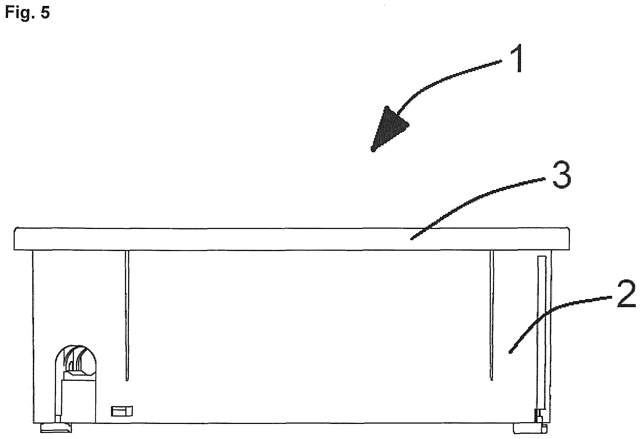

Fig. 5 zeigt eine weitere Seitenansicht des erfindungsgemäßen Dosengehäuses 1, gemäß Fig. 1.

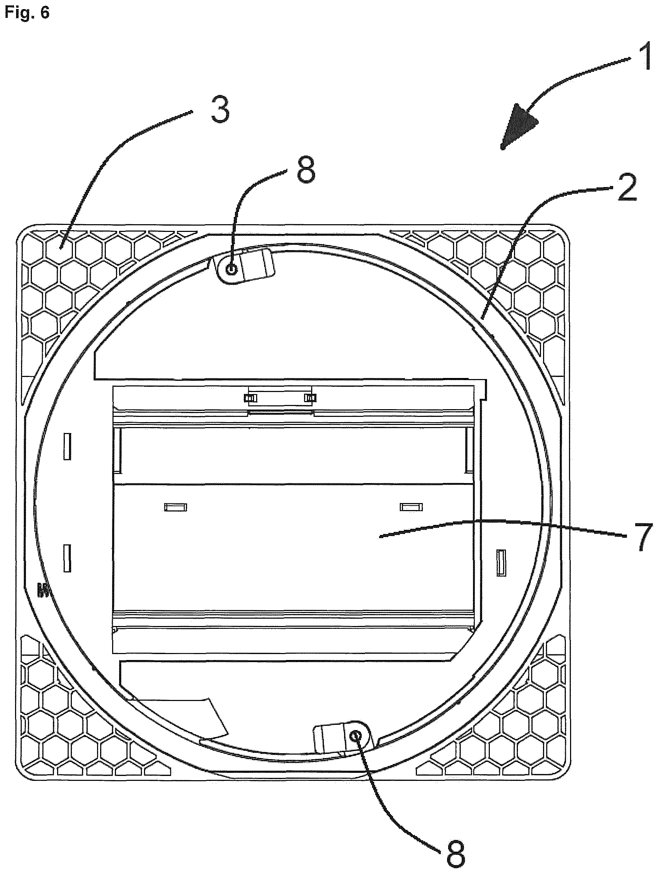

Fig. 6 zeigt eine Ansicht auf das erfindungsgemäße Dosengehäuse 1, gemäß Fig. 1, von unten.

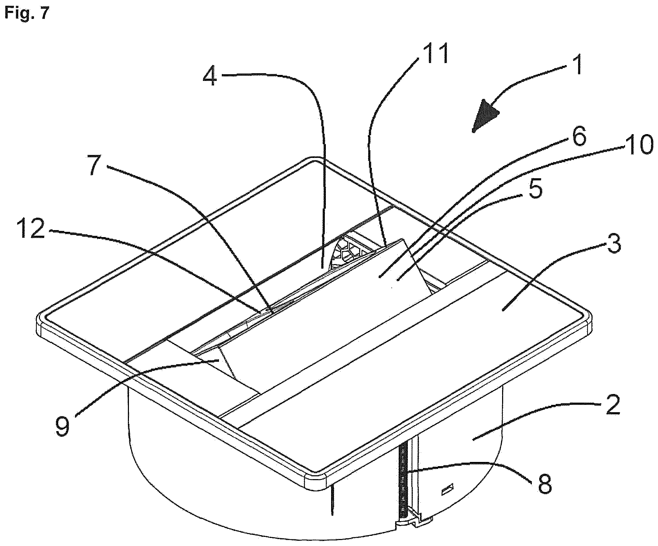

Fig. 7 zeigt eine perspektivische Ansicht des erfindungsgemäßen Dosengehäuses 1, gemäß Fig. 1, im halb geöffneten Zustand. Das Steckdosengehäuse 7 ist drehbar um eine durch die zwei Stirnseiten, nämlich eine Stirnseite 9 und eine Stirnseite 10, des Steckdosengehäuse 7 verlaufende Achse in dem Dosengehäuse 1 angeordnet. Zwischen den Stirnseiten 9 und 10 ist die eine geschlossene Oberfläche 5 aufweisende Seite 6 angeordnet, die eine Kante 11 bildend winklig zu einer Anschlussseite 12 des Steckdosengehäuses 7 angeordnet ist.

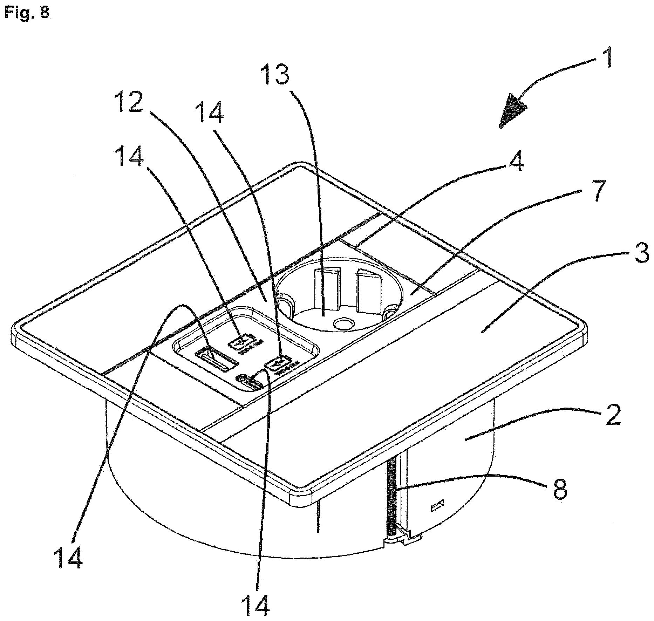

Fig. 8 zeigt eine perspektivische Ansicht des erfindungsgemäßen Dosengehäuses 1, gemäß Fig. 1, in einem Zustand, in dem die Anschlussseite 12 zugänglich ist. Das Steckdosengehäuse 7 weist einen Steckdosentopf 13 und unterschiedliche USB-Anschlüsse 14 auf. Denkbar ist auch, dass das Steckdosengehäuse 7 an seiner eine geschlossene Oberfläche 5 aufweisende Seite 6 und/oder seiner Anschlussseite 12 eine Induktionsplatte (Wireless-Charger) aufweist, um Geräte induktiv laden zu können. Bevorzugt ist die Induktionsplatte am der eine geschlossene Oberfläche 5 aufweisende Seite 6 angeordnet, wodurch ein induktives Laden eines Gerätes im die Anschlussseite 12 schützenden Zustand des erfindungsgemäßen Dosengehäuses 1 möglich ist. Denkbar ist auch, dass eine Induktionsplatte an der Abdeckung 3 angeordnet ist, wodurch ein induktives Laden eines Gerätes unabhängig vom Zustand des erfindungsgemäßen Dosengehäuses 1, also sowohl im die Anschlussseite 12 Zustand als auch im die Anschlussseite 12 zugänglichen Zustand des erfindungsgemäßen Dosengehäuses 1, möglich ist.

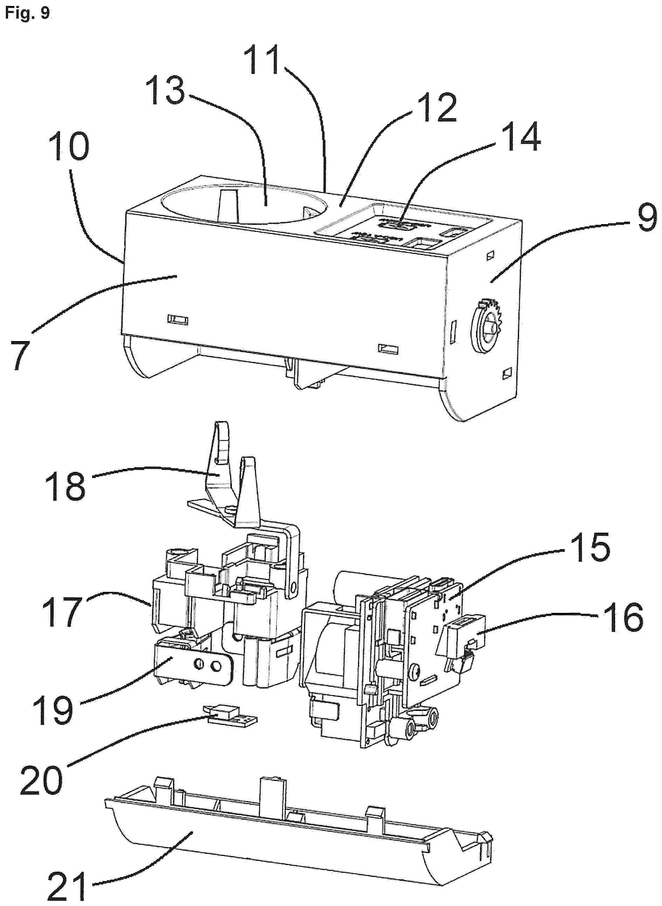

Fig. 9 zeigt Baugruppen des Steckdosengehäuses 7. Sichtbar ist ein USB Charger 15, ein Sensor 16 (z.B. Dioden-Sensor) für die USB Steckererkennung, ein Gehäuse 17 für den Kinderschutz, eine Schutzkontaktfeder 18, eine L/N Kontaktfeder 19 ein Switch 20 (z.B. Detector Switch) zur Steckererkennung und ein Niederhalter 21. Der Sensor 16 erkennt ein gestecktes USB A & C Kabel. Somit wird von dem Sensor 16 insbesondere erkannt, wenn ein USB-A- oder ein USB-C-Kabel oder zeitgleich ein USB-A- und USB-C-Kabel eingesteckt ist. Dies verhindert eine Drehung des Steckdosentopfes 7 bei gestecktem USB A & C Kabel. Für die Steckererkennung des Steckdosentopfes 13 sorgt der Switch 20. Durch das Einstecken des Steckerpins wird ein Schieber des Kinderschutzes bewegt. Diese Bewegung wird genutzt, um den Switch 20 zu betätigen. Dadurch sendet der Switch 20 der Elektronik ein Signal, dass ein Stecker gesteckt ist und verhindert eine Drehung des Steckdosentopfes 7. Sollte durch den Sensor 16 und den Switch 20 kein Stecker erkannt werden, verdreht der Steckdosentopf 7 bevorzugt nach einer Zeit automatisch, um die Anschlussseite 12 zu schützen.

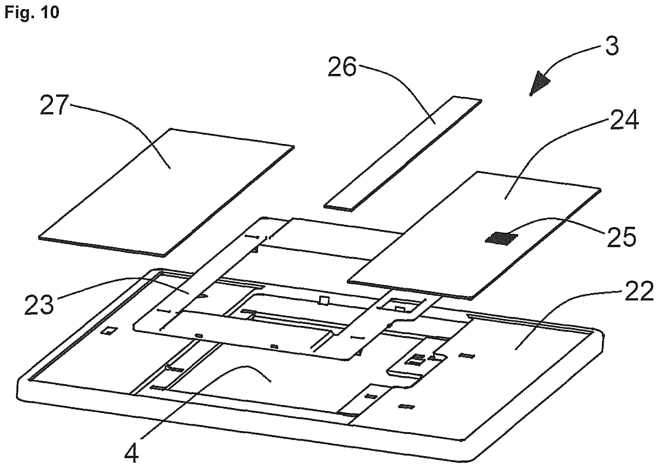

Fig. 10 zeigt eine Explosionszeichnung eines aus mehreren Teilen bestehenden Deckels 3. Sichtbar ist ein Grundträger 22, eine Abdeckung 23, eine Zierblende 24, die bevorzugt ein Logo 25 aufweist, eine Blende 26 für den Sensor, durch den die Drehung des Steckdosengehäuses 7 erfolgt, wobei der Sensor bevorzugt ein Sensor einer Gestensteuerung, ein Sensor einer Sprachsteuerung oder ein Lichtsensor ist, und eine Zierblende 27, die bevorzugt kein Logo aufweist.

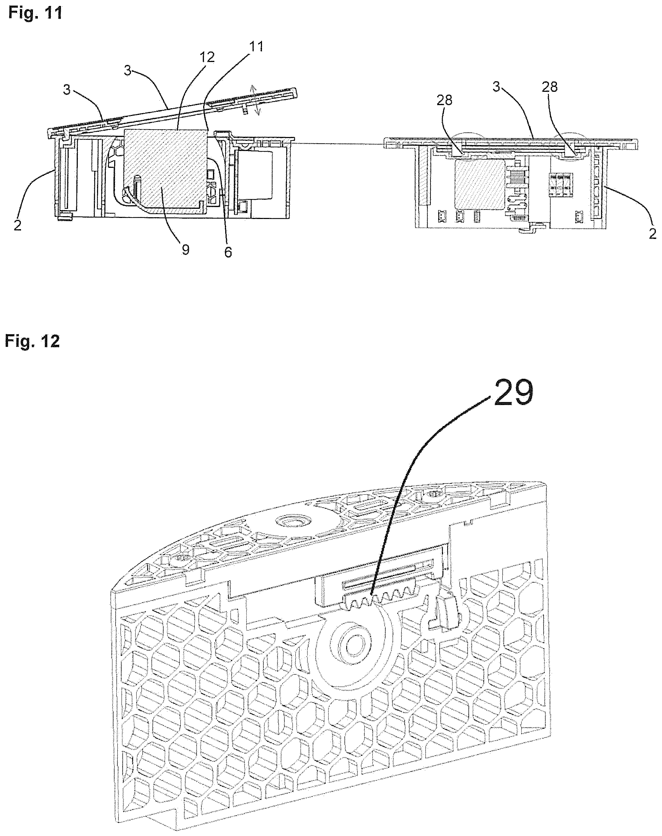

Fig. 11 zeigt eine Schnittansicht der Anbringung bzw. Lösung des Deckels 3 vom Gehäuse 2. Die komplette Baugruppe Deckel 3 wird auf das Gehäuse 2 geklipst. In Fig. 11 ist die Kippbewegung (Pfeilrichtung) zu sehen, die ausgeübt werden muss, um den Deckel 3 zu lösen. Die Verrastung wird durch einen Schieber, der mit einer Feder gelagert ist, an dem Gehäuse 2 befestigt. Schräge Rastnasen 28 am Deckel 3 sorgen dafür, dass mit einer bestimmten Kraft die Federkraft überwunden werden kann, um den Deckel 3 in einer Kippbewegung zu entfernen.

Fig. 12 zeigt weitere Details eines erfindungsgemäßen Dosengehäuses 1. Bevorzugt erfolgt die Drehung mittels einer nicht dargestellten Motoreinrichtung, die einen Motor, insbesondere einen Elektromotor, und ein Ritzel aufweist, das mit einer Zahnstange in Wirkverbindung steht und diese antreibt. An dieser Zahnstange ist eine weitere Zahnstange 29 gelagert, die die Kraft an das Steckdosengehäuse 7 überträgt und somit die Drehbewegung des Steckdosengehäuses 7 einleitet.

In dem Gehäuse 2 ist ein Schieber verbaut, der sich durch eine steigende Rampe an der Zahnstange, die mit dem Ritzel in Wirkverbindung steht, bewegt. Diese Bewegung sorgt dafür, dass dieser Schieber in eine Öffnung des Steckdosengehäuses 7 eintaucht und das Steckdosengehäuse 7 im Zustand, in dem die Anschlussseite 12 zugänglich ist, blockiert. Diese Blockierung ist notwendig, um ein manuelles Drehen des Steckdosengehäuses 7, beim Stecken eines Steckers, zu verhindern.

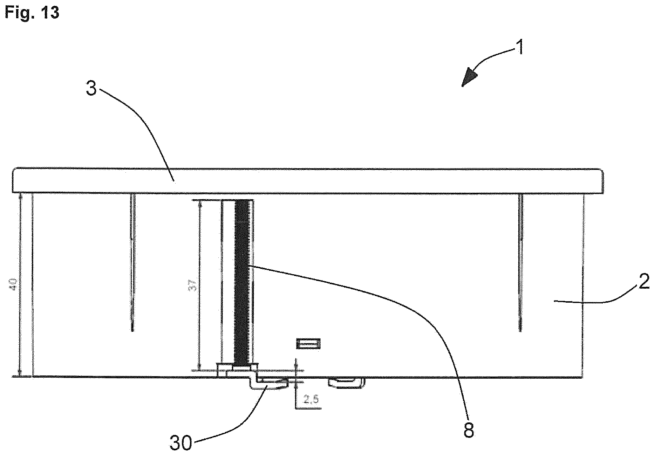

Fig. 13 zeigt eine Seitenansicht des erfindungsgemäßen Dosengehäuses 1. Die Montage des erfindungsgemäßen Dosengehäuses 1 erfolgt bevorzugt über einen runden Ausschnitt mit einem Durchmesser von 121 mm. Die Einbautiefe des erfindungsgemä-ßen Dosengehäuses 1 beträgt 40 mm. Das Gehäuse 2 wird mit einer M3-Schraube und speziellen Krallen, den Befestigungskrallen 30, befestigt. Die möglichen Arbeitsplattenstärken liegen bevorzugt bei 6 mm bis 40 mm. Die Montage auf die Tischplatte erfolgt bevorzugt von oben und das erfindungsgemäße Dosengehäuse 1 kann, mittels Vertiefung in der Tischplatte, auch flächenbündig in der Tischplatte verbaut werden.

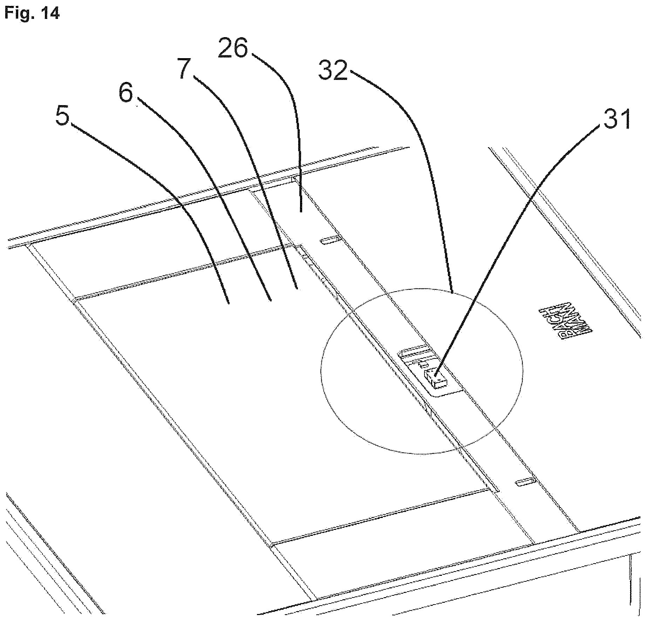

Fig. 14 zeigt eine weitere Detailansicht des erfindungsgemäßen Dosengehäuses 1. Der Sensor 31, dessen Position mit einem Kreis 32 verdeutlicht wird, steuert die Öffnung des Steckdosengehäuses 7. Wird beispielsweise eine Hand über das erfindungsgemäße Dosengehäuse 1 gehalten, so erkennt die Steuerung die Geste und dreht das Steckdosengehäuse 7. Der Sensor 31 ist so programmiert, das andere Bewegungen, wie putzen mit einem Putzlappen oder verschieben eines Kochtopfes die Drehung nicht auslöst. Auch sollen äußere Störeinflüsse, wie z.B. Licht, die Sensorfunktion nicht beeinträchtigen. Bei erneutem Auslösen des Sensors 31 wird das Steckdosengehäuse 7 wieder zurück gedreht.

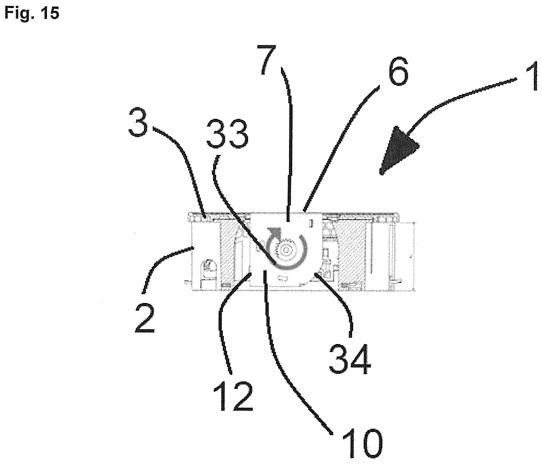

Fig. 15 zeigt eine im Schnitt dargestellte Seitenansicht eines erfindungsgemäßen Dosengehäuses 1 im Schnitt in dem Zustand, in dem die Anschlussseite 12 geschützt ist.

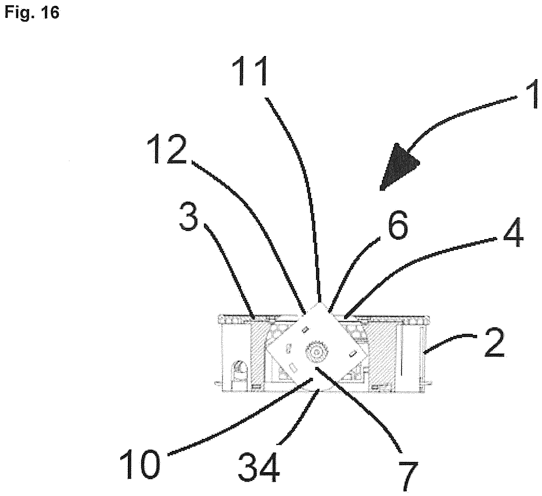

Fig. 16 zeigt eine im Schnitt dargestellte Seitenansicht eines erfindungsgemäßen Dosengehäuses 1 im Schnitt im halb geöffneten Zustand.

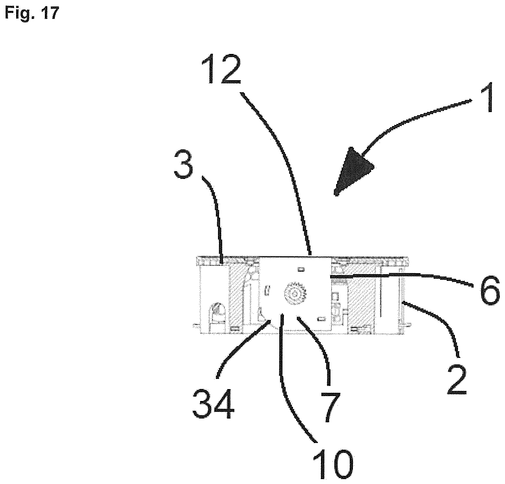

Fig. 17 zeigt eine im Schnitt dargestellte Seitenansicht eines erfindungsgemäßen Dosengehäuses 1 im Schnitt in dem Zustand, in dem die Anschlussseite 12 und damit insbesondere der Steckdosentopf 13 und die USB-Anschlüsse 14 zugänglich sind.

Die Fig. 15 bis Fig. 17 sollen die Drehbewegung eines Steckdosengehäuses 7 verdeutlichen. Um die Anschlussseite 12 des erfindungsgemäßen Dosengehäuses 1 zugänglich zu machen, dreht sich das Steckdosengehäuse 7 in Richtung des Pfeils 33. Um die Anschlussseite 12 des erfindungsgemäßen Dosengehäuses 1 zu schützen, wird das erfindungsgemäße Dosengehäuses 1 durch Drehen des Steckdosengehäuses 7 in entgegengesetzter Richtung bewegt. Eine abgerundete Kante 34 ermöglicht eine Verringerung der Einbautiefe.

Alle in der Beschreibung und der Zeichnung dargestellten Merkmale können sowohl einzeln als auch in beliebiger Kombination miteinander erfindungswesentlich sein.

### Bezugszahlenliste

- 1: Dosengehäuse
- 2: Gehäuse
- 3: Deckel
- 4: Öffnung
- 5: Oberfläche
- 6: Seite
- 7: Steckdosengehäuse
- 8: Schrauben
- 9: Stirnseite
- 10: Stirnseite
- 11: Kante
- 12: Anschlussseite
- 13: Steckdosentopf
- 14: USB-Anschluss
- 15: USB Charger
- 16: Sensor
- 17: Gehäuse
- 18: Schutzkontaktfeder
- 19: L/N Kontaktfeder
- 20: Switch
- 21: Niederhalter
- 22: Grundträger
- 23: Abdeckung
- 24: Zierblende
- 25: Logo
- 26: Blende
- 27: Zierblende
- 28: Rastnase
- 29: Zahnstange
- 30: Befestigungskralle
- 31: Sensor
- 32: Kreis
- 33: Pfeil
- 34: Kante

## Patentansprüche

1. Dosengehäuse (1),
- mit einem Gehäuse (2), das an einer Seite mit einem Deckel (3) abgedeckt ist, wobei der Deckel (3) mindestens eine Öffnung (4) aufweist,
**dadurch gekennzeichnet,**
**dass** zum Verschließen einer Öffnung (4) in der Öffnung (4) mindestens ein Steckdosengehäuse (7) angeordnet ist, wobei ein in der Öffnung (4) angeordnetes Steckdosengehäuse (7) zwei Stirnseiten (9, 10) aufweist, zwischen denen eine Kante (11) bildend eine Anschlussseite (12) und mindestens eine eine geschlossene Oberfläche (5) aufweisende Seite (6) zueinander winklig angeordnet sind, wobei ein Steckdosengehäuse (7) drehbar um eine durch die zwei Stirnseiten (9, 10) des Steckdosengehäuse (7) verlaufende Achse in dem Dosengehäuse (1) angeordnet ist, wodurch die Öffnung (4) entweder durch die Anschlussseite (12) oder die eine geschlossene Oberfläche (5) aufweisende Seite (6) des Steckdosengehäuses (6) verschließbar ist.

2. Dosengehäuse (1), nach Anspruch 1,
**dadurch gekennzeichnet,**
**dass** an der Anschlussseite (12) mindestens ein Steckdosentopf (13), mindestens ein USB-Anschluss (14), mindestens ein USB-Charger (15), mindestens ein Wireless-Charger, mindestens ein Schalter, mindestens eine LAN-Dose, mindestens ein Scart-Anschluss und/oder mindestens einen computerüblicher Anschluss odgl. angeordnet ist.

3. Dosengehäuse (1), nach Anspruch 1 oder Anspruch 2,
**dadurch gekennzeichnet,**
**dass** die Anschlussseite (12) und die eine geschlossene Oberfläche (5) aufweisende Seite (6) des Steckdosengehäuses (7) in einem rechten Winkel zueinander angeordnet sind.

4. Dosengehäuse (1), nach einem der vorhergehenden Ansprüche,
**dadurch gekennzeichnet,**
**dass** mindestens ein Steckdosengehäuse (7) eine abgerundete Kante (34) aufweist.

5. Dosengehäuse (1), nach einem der vorhergehenden Ansprüche,
**dadurch gekennzeichnet,**
**dass** die Drehung eines Steckdosengehäuses (7) durch eine Gestensteuerung und/oder durch eine Sprachsteuerung und/oder durch einen Lichtsensor erfolgt.

6. Dosengehäuse (1), nach Anspruch 5,
**dadurch gekennzeichnet,**
**dass** die Gestensteuerung mindestens einen Sensor (30) aufweist.

7. Dosengehäuse (1), nach einem der vorhergehenden Ansprüche,
**dadurch gekennzeichnet,**
**dass** mindestens ein Steckdosengehäuse (7) zur Steckererkennung mindestens einen Sensor (16) und/oder mindestens einen Switch (20) aufweist.

8. Dosengehäuse (1), nach einem der vorhergehenden Ansprüche,
**dadurch gekennzeichnet,**
**dass** der Deckel (3) abnehmbar ist.

9. Dosengehäuse (1), nach einem der vorhergehenden Ansprüche,
**dadurch gekennzeichnet,**
**dass** eine eine geschlossene Oberfläche (5) aufweisende Seite (6) des Steckdosengehäuses (7) einen Wireless-Charger aufweist.

10. Verfahren zur Bedienung eines Dosengehäuses (1), wobei das Dosengehäuses (1) ein Gehäuse (2) aufweist, das an einer Seite mit einem Deckel (3) abgedeckt ist, wobei der Deckel (3) mindestens eine Öffnung (4) aufweist,
**dadurch gekennzeichnet,**
**dass** zum Verschließen einer Öffnung (4) in der Öffnung (4) mindestens ein Steckdosengehäuse (7) angeordnet ist, wobei ein in der Öffnung (4) angeordnetes Steckdosengehäuse (7) zwei Stirnseiten (9, 10) aufweist, zwischen denen eine Kante (11) bildend eine Anschlussseite (12) und mindestens eine eine geschlossene Oberfläche (5) aufweisende Seite (6) zueinander winklig angeordnet sind, wobei ein Steckdosengehäuse (7) drehbar um eine durch die zwei Stirnseiten (9, 10) des Steckdosengehäuse (7) verlaufende Achse in dem Dosengehäuse (1) angeordnet ist, so dass ein Steckdosengehäuse (7) entweder zur Nutzung seiner Anschlussseite (12) in eine Position verdreht werden kann, in der die Öffnung (4) durch die Anschlussseite (12) verschlossen ist oder zum Schutz seiner Anschlussseite (12) in eine Position verdreht werden kann, in der die Öffnung (4) durch die eine geschlossene Oberfläche (5) aufweisende Seite (6) des Steckdosengehäuses (7) verschlossen ist.

11. Verfahren, nach Anspruch 10,
**dadurch gekennzeichnet,**
**dass** ein Steckdosengehäuse (7) durch eine Gestensteuerung und/oder durch eine Sprachsteuerung und/oder durch einen Lichtsensor gedreht wird.

12. Verfahren, nach Anspruch 10 oder Anspruch 11,
**dadurch gekennzeichnet,**
**dass** bei einer Nichtbenutzung der Anschlussseite (12) das Steckdosengehäuse (7) automatisch in die Position verdreht wird, in der die Öffnung (4) durch die eine geschlossene Oberfläche (5) aufweisende Seite (6) des Steckdosengehäuses (7) verschlossen ist.

13. Verfahren, nach einem der Ansprüche 10 bis 12,
**dadurch gekennzeichnet,**
**dass** eine Erkennung eines auf der Anschlussseite (12) eingesteckten Steckers durch mindestens einen Sensor (16) und/oder durch mindestens einen Switch (20) eine Drehung des Steckdosengehäuses (7) verhindert wird.

14. Verfahren, nach einem der Ansprüche 10 bis 13,
**dadurch gekennzeichnet,**
**dass** bei dem Verfahren ein Dosengehäuse (1), gemäß einem der Ansprüche 1 bis 9, eingesetzt wird.
